# EUROPEAN PATENT SPECIFICATION

(11) **EP 3 397 069 B1**
(45) Date of publication and mention of the grant of the patent: **16.04.2025**
(21) Application number: 16825682.4
(22) Date of filing: 27.12.2016
(51) Int. Cl.: A23K 10/30, A23K 20/111, A23K 20/163, A23K 50/40, A23K 50/42, A23K 40/25, A23K 40/30

(54) **PET FOOD COMPOSITIONS**
TIERNAHRUNGSZUSAMMENSETZUNGEN
COMPOSITIONS ALIMENTAIRES POUR ANIMAL DOMESTIQUE

(30) Priority: 30.12.2015 WO PCT/US2015/068193
(43) Date of publication of application: 07.11.2018
(73) Proprietor: Hill's Pet Nutrition, Inc., Topeka, KS 66603 (US)
(72) Inventor: JACKSON, Matthew, Topeka, Kansas 66604 (US); JEWELL, Dennis Edward, Lawrence, Kansas 66049 (US)
(74) Representative: Wichmann, Hendrik
(86) International application number: PCT/US2016/068644
(87) International publication number: WO 2017/117091

(56) References cited:
- WO-A1-2011/082080
- US-A1- 2005 113 334
- DATABASE WPI Week 201422, 2014 Derwent World Patents Index; AN 2014-D62586, XP002761070
- SUN JIN HUR ET AL: "Review of natural products actions on cytokines in inflammatory bowel disease", NUTRITION RESEARCH, ELSEVIER INC, XX, vol. 32, no. 11, 1 November 2012 (2012-11-01), pages 801 - 816, XP002697231, ISSN: 0271-5317, DOI: 10.1016/J.NUTRES.2012.09.013
- VILADOMIU MONICA ET AL: "Nutritional protective mechanisms against gut inflammation", JOURNAL OF NUTRITIONAL BIOCHEMISTRY, BUTTERWORTH PUBLISHERS, STONEHAM, GB, vol. 24, no. 6, 27 March 2013 (2013-03-27), pages 929 - 939, XP028564212, ISSN: 0955-2863, DOI: 10.1016/J.JNUTBIO.2013.01.006

## Description

### CROSS-REFERENCE TO RELATED APPLICATION

This application claims the benefit of priority from PCT/US2015/068193, filed December 30, 2015.

### BACKGROUND

Pets require a healthy diet and proper digestion for continued growth and ordinary wellbeing. However, gastrointestinal distress commonly interferes with the ordinary digestion of common pet food compositions. Some of these problems can be quite serious, such as inflammatory bowel disease (IBD) and other chronic digestive conditions. IBD is commonly accompanied by diarrhea, which can be extremely unpleasant to the pet harboring the condition or to a pet owner who must clean up after the pet, particularly if on a chronic basis.

One mechanism for treating IBD and improving inflammatory status in pets is to administer beneficial agents, such as medicaments, prebiotics, probiotics, and the like, through traditional pet food compositions. However, ensuring that the benefit agent is delivered to the target site has been a challenge. As such, there exists a need for pet food compositions which are able to control the release of a benefit agent and ensure that the benefit agent is delivered to the target site. Embodiments of the present invention are designed to meet these needs.
A dog food composition comprising tea polyphenols, bean pulp, corn, wheatmeal and fish meal, and a preparation method thereof are described in CN 103 461 730 A. US 2005/113334 A1 describes a method for reducing the quantity of *Desulfovibrio* and/or *Helicobacter ssp.* in the GI tract of a companion pet which comprises orally administering to the said pet a *Desulfovibrio* and/or *Helicobacter ssp.* reducing quantity of a fiber or other component. Hur, Sun Jin, et al. "Review of natural products actions on cytokines in inflammatory bowel disease." Nutrition research 32.11 (2012): 801-816 provides an overview of effects that natural products, including polyphenols and fish oil, have on inflammatory bowel disease. WO 2011/082080 describes compositions and methods for treating or preventing a degenerative joint condition, wherein the compositions and methods include feeding the companion animal an edible composition including at least one pyruvate or salt thereof.

### BRIEF SUMMARY

The present invention provides a controlled release pet food composition comprising: a matrix comprising: a fiber component comprising a high solubility fiber source and low solubility fiber source with a ratio of a high solubility source to low solubility source from about 1:20 to about 1:2, and a polyphenol source; wherein the matrix is adapted to deliver the polyphenol source to the lower gastrointestinal (GI) tract of a mammal after ingestion by the mammal, where a mammal is a dog or cat, as defined in the claims.

The present invention also provides a method of forming a pet food composition of the invention, comprising the steps of: extruding the matrix composition to form a controlled-release kibble, the matrix composition comprising: the fiber component comprising a high solubility fiber source and low solubility fiber source, and the polyphenol source; wherein the matrix is adapted to ensure that the polyphenol source is not available for digestion or absorption in the upper gastrointestinal (GI) tract of the mammal when ingested by the mammal; and applying a surface coating to the kibble.

A pet food composition as described herein can be used in a method for treating, preventing, or ameliorating a symptom of an inflammatory disease, condition or disorder, e.g. inflammatory bowel disease, in a mammal, comprising administering any one of the compositions described herein to a mammal, e.g. a companion animal, in need thereof, as defined in the claims.

A pet food composition as described herein can be used for beneficially manipulating the gut microflora of a mammal, comprising administering any one of the compositions described herein to the mammal, e.g. a companion animal, in need thereof, as defined in the claims.

### BRIEF DESCRIPTION OF THE DRAWINGS

Figures 1A, 1B and 1C depict data illustrating that an exemplary composition of the present invention successfully provides polyphenols to the colon where they are metabolized by resident gut microbiota.
Figures 2A, 2B and 2C depict data illustrating that an exemplary composition of the present invention provides elevated serum levels of microbial post-biotics.
Figure 3 provides a histogram depicting the results of a canine stool score comparison between a composition of the present invention and a comparative composition.
Figure 4 depicts the stool quality results from a clinical intervention trial involving both healthy and IBD canines.

### DETAILED DESCRIPTION

The pet food compositions set forth herein can provide a multifactorial therapy based on nutritive dietary factors that: (1) decrease allergenicity due to the use of hydrolyzed proteins; (2) provide readily digestible macronutrients; (3) provide glutaminyl amino acids that provide metabolic intermediates to enterocytes; (4) provide immune modulators that decrease inflammatory responses; and (5) provide microbial cell wall fractions that promote tolerance or hindgut commensal biota. The pet food compositions as described herein can increase gut microbial production of metabolic end products of dietary polyphenols and/or enhance the absorption of these dietary polyphenols into systemic circulation.

The pet food compositions of the present invention comprise a matrix comprising dietary components capable of providing the desired effect of immune optimization. Specifically, the compositions may comprise a matrix comprising an inert, non-fermentable fiber source having polyphenols chemically or physically bound thereto in such a manner so as to be not available for digestion or absorption in the upper gastrointestinal (GI) tract. These fiber-bound polyphenols may bypass the upper GI tract and arrive intact to the colon of the animal. It is believed that the gut microbes metabolize dietary fiber; and in the process, liberate the fiber-bound polyphenols. These newly liberated polyphenols are also subject to microbial metabolism, producing small biomolecules called "post-biotics". Post-biotics are absorbed across the colon and distributed systemically where they have pleiotropic effects, including immune modulation which helps to treat IBD and improve the inflammatory response. One benefit of the use of a low solubility fiber source (e.g. lignin), which is poorly soluble in the mammalian lower GI tract, is that it provides for stool bulking.

In some embodiments, the matrix comprises a fibrillary network. In some embodiments, the fibrillary network comprises fibers having varying dissolution rates. The dissolution rates of the fibers can be pH dependent or/and temperature dependent. The fibrillary network can comprise interfibrillary spaces. The interfibrillary spaces can be of dimension sufficient to permit entry of a dissolution agent into the fibrillary network.

As used herein, "dissolution agent" is intended to include a fluid, material, or the like, which enhances the rate of dissolution of the matrix, thereby facilitating release of the benefit agent (e.g. a polyphenol source).

The matrix of pet food composition describe herein comprises a polyphenol source as a benefit agent which can be bound by the fiber source.

The polyphenol source can be substantially unavailable to the upper GI tract, as a result of the dissolution profile of the controlled release matrix.

The invention disclosed herein provides a controlled release pet food composition comprising: a matrix comprising: a fiber component comprising a high solubility fiber source and low solubility fiber source, and a polyphenol source; wherein the matrix is adapted to deliver the polyphenol source to the lower gastrointestinal (GI) tract of a mammal after ingestion by the mammal, as defined in the claims. The weight ratio of high solubility fiber source to low solubility fiber source is from about 1 : 20 to about 1 : 2. In other embodiments, the weight ratio of high solubility fiber source to low solubility fiber source is from about 1 : 15 to about 1 : 2. Still further embodiments provide compositions wherein the weight ratio of high solubility fiber source to low solubility fiber source is from about 1 : 10 to about 1 : 3. Other embodiments provide compositions wherein the weight ratio of high solubility fiber source to low solubility fiber source is from about 1 : 5 to about 1 : 3. While other embodiments provide compositions wherein the weight ratio of high solubility fiber source to low solubility fiber source is about 1 : 4. In some embodiments, the weight ratio of high solubility fiber source to low solubility fiber source is about 1 : 4.3.

In some embodiments, the terms "high solubility fiber" and "soluble fiber" may be used interchangeably. In some embodiments, the terms "low solubility fiber" and "insoluble fiber" may be used interchangeably.

The pet food composition of the invention comprises a fiber component comprising a high solubility fiber source and a low solubility fiber source, as defined in the claims. Oat bran, buckwheat groats, pea bran, barley, tomato pomace, citrus pulp, beet pulp, and a combination of two or more thereof can serve as a high solubility fiber source. A cellulosic material, a pecan fiber, or a combination thereof can serve as a low solubility fiber source.

In some embodiments, the polyphenol source is of food or plant origin. In some embodiments, the polyphenol source of food origin comprises a polyphenol of fruit or vegetable origin, as further defined in the claims. In some embodiments, the polyphenol source comprises a flavonoid or a phenolic acid.

In some embodiments, the polyphenol source provides a polyphenol selected from: dehydroxy rosmarinic acid, Coumaroylnepitrin, eupafolin, carnosol, scutellarin, kaempferol, rosmarinic acid, rosmanol, cirsimaritin, luteolin, 6-methoxy-luteolin, 7-epirosmannol, quercetin, catechin, hesperidin, cyanidin, and a combination of two or more thereof.

Some embodiments further comprise a source of hydrolyzed animal or plant protein comprising an amino acid profile. In some embodiments, the source of hydrolyzed animal or plant protein comprises chicken liver. In some embodiments, the source of hydrolyzed animal or plant protein is present in an active content of from about 25 to about 45 wt. %.

In other embodiments, the compositions comprise a source of omega-3, omega-6 or omega-9 fatty acids. Some embodiments comprise high docosahexaenoate fish oil. In some embodiments, the active content of the high docosahexaenoate fish oil is from about 0.5 to about 2.5 wt. %.

A pet food composition described herein can be used in methods for treating, preventing, or ameliorating a symptom of an inflammatory disease, condition or disorder, e.g. inflammatory bowel disease, in a mammal, the methods comprising administering an effective amount of any one of the compositions described herein.

A pet food composition described herein can be used in methods for beneficially manipulating the gut microflora of a mammal, the methods comprising administering an effective amount of any one of the compositions described herein to a mammal in need thereof.

Yet other embodiments provide method of forming a pet food composition described herein, comprising the steps of: extruding the matrix comprising: the fiber component comprising a high solubility fiber source and low solubility fiber source, and the polyphenol source; applying a surface coating to the kibble; wherein the matrix is adapted to deliver the polyphenol source to the lower gastrointestinal (GI) tract of a mammal after ingestion by the mammal. In some embodiments, the surface coating comprises a palatant.

In some embodiments, the present invention is directed to a controlled release composition for companion animals that can be orally administered by veterinarian, pet owner or other caregiver. The composition of the invention is chewable, without any significant loss of the controlled release property. In particular, the benefits associated with the controlled release functionality are substantially maintained even after mastication by the animal. Thus it will be understood that chewable in the present context means that the controlled release performance of the dosage form is effectively resistant to chewing.

Although compositions of the present invention are generally chewed, the present disclosure is intended to encompass compositions which provide controlled release of the benefit agent after swallowing.

As used herein, "controlled release" refers to the rate of release of a pharmaceutically active agent as a function of some property of the dosage form. For example, 1) targeted release, wherein the benefit agent is adapted to be released at a particular location within the body; 2) delayed release, wherein there is a time lag after ingestion of the composition and before the release of the benefit agent is initiated; and 3) pulsatile release, wherein the benefit agent is released in an immediate release or modified release fashion, e.g. targeted or delayed, followed by a time period in which there is very little or no release, followed by yet another period of immediate or modified release and so on; one or more pulses of release can be thus obtained.

As appreciated by those of skill in the art, other delivery profiles are possible.

In some embodiments, the controlled release compositions of the present invention provide a benefit agent (e.g. a polyphenol) in particulate form. In some embodiments, the benefit agent is provided in the form of particles having a size such that when the composition is chewed by an animal the benefit agent (particle) will not be further comminuted to any significant degree.

In addition to the specific methods described herein, the compositions of the present invention can be prepared by various techniques known to those skilled in the art.

In some embodiments, the particulates have an average particle size of up to about 5000 µm; more preferred is an average particle size of about 10 µm to about 5000 µm; still more preferred is an average particle size of about 50 µm to about 2000 µm; yet still more preferred is an average particle size of about 100 µm to about 1000 µm. As one skilled in the art will appreciate, the particles may be of any size of shape as long as they provide the targeted delivery described herein.

In addition to the high solubility and low solubility fiber sources described herein, additional ingredient, e.g. polymers, may be used to control the release of the benefit agent. For example, pH sensitive polymers which are typically insoluble at low pH, e.g. pH of from 1 to about 5 as generally found in the stomach, but soluble at higher pH, e.g. greater than pH of 5.5, as typically encountered in the small intestine. In particular, suitable polymers include without limitation: hydroxypropylmethyl cellulose, ethylcellulose, Eudragit RL100, Eudragit RS100, mixtures of Eudragit RL100/RS100, Eudragit S100, Eudragit NE30D, cellulose acetate, cellulose acetate butyrate, silicone, ethylcellulose dispersions (commercially available as Aquacoat^{®} FMC and Surrelease^{®} (coloron).

As used herein, the term "companion animal" refers to domesticated animals. Companion animals exclude humans. Examples of companion animals include, but are not limited to, dogs, cats and horses. The matrix of the pet food composition of the invention is adapted to deliver the polyphenol source to the lower gastrointestinal tract of a dog or a cat.

Some embodiments of the present invention comprise a "palatant" or "palatability improving agent". As used herein, the term "palatability improving agent" or "palatant" include any composition that alters the palatability of the composition to which it is added. The palatability improving agents of the invention can be meat-based or non-meat based derived from meat.

In some embodiments, the pet food composition generally comprises hydrolyzed animal or plant protein comprising a nutritionally complete amino acid profile (e.g., dried chicken livers), peptidyl glutamine (e.g., Hyvital^{®} wheat glutamine PN), the insoluble, inert fibers as set forth herein (pecan fiber, oat, and cellulose), the probiotic soluble fiber as set forth herein (e.g., beet pulp), the fiber-bound polyphenols as set forth herein (e.g., cranberry pomace, pomegranate extract, green tea extract), medium chain triglycerides, high docosahexaenoate fish oil, ginger root powder, boswellia serrata extract, and yeast beta glucan.

A pet food composition comprising the components set forth in Table 1 below in the designated amounts, based upon the total weight of the pet food composition, is described herein (not according to the invention).

**Table 1**

| **Description** | **Preferred Active Content Range (w/w %)** |
|---|---|
| Chicken, livers, hydrolyzed, dry | 25-45 |
| Hyvital^{®} wheat glutamine PN | 0.25-2 |
| Lysine, l, hydrochloride | 0.1-0.75 |
| Methionine, dl | <0.08 |
| Taurine | 0.075-0.2 |
| Captex^{®} 355 Medium Chained Triglyceride | 1-5 |
| Cellulose, coarse | 1-5 |
| Beet, pulp | 1-3 |
| OatWell^{®} 22 oat bran | 2-5 |
| Pecan Fiber | 1-5 |
| MEG-3^{®} 0355TG Fish Oil | 0.5-2.5 |
| Ginger Root Powder | 0.5-2 |
| Cranberry Pomace | 0.1-0.4 |
| Pomegranate Extract WS | 0.1-0.4 |
| Green Tea PE 50% EGCG WS | 0.1-0.4 |
| Boswellia PE 65% Boswellic Acids | 0.05-0.3 |
| Sensimune^{™} 75 (Yeast Cell Wall) | 0.05-0.3 |

The pet food compositions set forth herein may be formed by extrusion to form a kibble-type pet food composition. In some embodiments, the milled raw ingredients of the composition are extruded and then a surface coating comprising a palatant and/or a nutritional oil is applied. In some embodiments, the kibble is spray coated in a tumbling mixer with a composition comprising a palatant and/or a nutritional oil. In other embodiments, the kibble is coated using a vacuum enrobing technique, wherein the kibble is subjected to vacuum and then exposed to coating materials after which the release of the vacuum drives the coating materials inside the kibble.

The invention will now be described in conjunction with the following, non-limiting examples.

### EXAMPLES

### Example 1 (reference example)

An pet food composition (Example 1) is prepared as set forth in Table 2 (below). All amounts are provided in weight percent, based upon total weight of the pet food composition. The composition is formulated according to the nutrition standards set forth by the American Associated of Feed Control Officials (AAFCO) and the National Research Council (NRC). The composition is produced by extrusion, dried, and then coated with palatants.

**Table 2**

| **Ingredient** | **Example 1** |
|---|---|
| | **w/w %** |
| Chicken, livers, hydrolyzed, dry | 36.79 |
| Corn, starch, common canning | 32.45 |
| Choice White Grease | 1.00 |
| Vitamin Premix | 0.12 |
| Vitamin, premix, canine/feline, z/d, dry | 0.20 |
| Mineral, premix, 2305 | 0.08 |
| Vitamin E, oil, 29% | 0.10 |
| Hyvital^{®} Wheat Glutamine PN | 1.00 |
| Lysine, 1, hydrochloride | 0.50 |
| Methionine,dl | 0.07 |
| Taurine | 0.10 |
| Captex^{®} 355 Medium Chained Triglyceride | 4.00 |
| Cellulose, coarse | 3.00 |
| Lactic acid, food grade | 1.50 |
| Dicalcium phosphate | 1.20 |
| Chicken, liver, digest, optimizor LDPE H | 2.00 |
| Sodium chloride, iodized | 0.40 |
| Choline chloride, liquid, 70% | 0.25 |
| Calcium carbonate | 2.00 |
| Potassium chloride | 0.70 |
| Beet, pulp | 2.50 |
| OatWell^{®} 22 oat bran | 3.00 |
| Pecan Fiber | 2.00 |
| MEG-3^{®} 0355TG Fish Oil | 1.50 |
| Ginger Root Powder | 1.00 |
| Palatant | 0.75 |
| Natural flavor, Pork, Liver, Digest, D'T | 0.50 |
| Glyceryl monostearate | 0.25 |
| Cranberry Pomace | 0.20 |
| Pomegranate Extract WS | 0.20 |
| Green Tea PE 50% EGCG WS | 0.20 |
| Boswellia PE 65% Boswellic Acids | 0.20 |
| Sensimune^{™} 75 (Yeast Cell Wall) | 0.15 |

To test the efficacy of the composition, an IACUC (Institutional Animal Care and Use Committee)-approved protocol is implemented which enrolled 13 canines having IBD, along with 13 healthy controls matched for age, weight and sex. Canines are assessed by analyzing blood and fecal markers of biochemical and clinical health. The study is a longitudinal cross-over design with both healthy dogs and dogs having IBD receiving each diet (Example 1 and a control diet). The control diet pet food composition is a commercially available under the brand Hill's^{®} i/d^{®} from Hill's Pet Nutrition, Inc. Diets are fed for four (4) weeks, after all of the animals are given a prefeed of one (1) week on whichever diet the dogs are consuming prior to test enrollment. Testing is then performed at a baseline time point (considered week 0; immediately after the 1 week prefeed), as well as at week 4 (Phase 1) and week 8 (Phase 2).

Stool scores are assessed on a five-point scale, with 5 being the healthiest (firmest) stool. Stools are further subjected to moisture and ash analysis, and the ash is subjected to mineral analysis. Bioactive markers of systemic chronic inflammation are also assessed in serum via metabolomics screening. The circulating level of basophils in the blood are also analyzed by clinical instrumentation. Lastly, stool quality is also examined by subjective (visual firmness score) and objective (osmolytes, organic dry matter).

As shown in Table 3 below, the test diet increased the number of stools with stool scores of 5 relative to the baseline and control diet.

**Table 3**

| **Time Point** | **Canine Group** | **Diet** | **Fecal Scores** |
|---|---|---|---|
| Baseline | Healthy | Baseline | 4, 5, 4, 5, 4, 4, 5, 5, 5, 5, 5, 5, 4 |
| | IBD | Baseline | 5, 4, 4, 4, 5, 5, 5, 4, 4,5,4,4,4 |
| Phase 1 | Healthy | Control | 5, 4, 5, 5, 4, 4, |
| | Healthy | Example 1 | 5, 5, 5, 5, 5, 5, 5 |
| | IBD | Control | 4,2,4,5,4 |
| | IBD | Example 1 | 5, 4,5, 5, 4, 4, 4 |
| Phase 2 | Healthy | Control | 4, 5, 5, 4, 5, 2, 5 |
| | Healthy | Example 1 | 5, 4, 5, 5, 4, 4 |
| | IBD | Control | 5, 3, 4, 3, 4, 5, 4 |
| | IBD | Example 1 | 4, 5, 5, 5, 4 |

As shown in Table 4 below, with respect to the moisture and ash analysis, the test diet consistently reduced moisture in stools and increased organic dry matter, and also generally decreased levels of sodium and potassium in feces, which has been shown to be associated with improved stool quality and reduced incidence of diarrhea.

**Table 4**

| **Time Point** | **Canine Group** | **Diet** | **Average Potassium Level (ppm)** | **Average Sodium Level (ppm)** | **Average Moisture Level (w/w %)** | **Average Organic Matter (w/w %)** |
|---|---|---|---|---|---|---|
| Baseline | Healthy | Baseline | 31.81 | 24.10 | 69.69 | 23.23 |
| | IBD | Baseline | 24.50 | 24.47 | 69.70 | 22.69 |
| Phase 1 | Healthy | Control | 23.27 | 32.38 | 67.07 | 25.27 |
| | Healthy | Example 1 | 21.99 | 13.67 | 65.22 | 26.72 |
| | IBD | Control | 34.77 | 23.19 | 66.14 | 23.71 |
| | IBD | Example 1 | 18.90 | 11.95 | 65.84 | 26.36 |
| Phase 2 | Healthy | Control | 25.26 | 23.06 | 67.37 | 25.38 |
| | Healthy | Example 1 | 21.42 | 14.67 | 66.51 | 25.88 |
| | IBD | Control | 22.20 | 18.23 | 67.62 | 25.00 |
| | IBD | Example 1 | 23.86 | 17.82 | 66.13 | 26.86 |

As shown in Table 5 below, regarding the assessment of the bioactive markers of inflammation, the test diet was shown to decrease levels of various phosphatidyl arachidonates, the precursors to pro-inflammatory prostaglandins, thus improving the inflammatory status in the dogs having IBD.

**Table 5**

| **Time Point** | **Canine Group** | **Diet** | **Average PA 1** | **Average PA 2** | **Average PA 3** | **Average PA 4** | **Average PA 5** |
|---|---|---|---|---|---|---|---|
| | | | **Relative Fold Level** | | | | |
| Baseline | Healthy | Baseline | 1.21 | 0.86 | 0.85 | 1.15 | 1.08 |
| | IBD | Baseline | 1.20 | 1.12 | 1.19 | 1.38 | 1.05 |
| Phase 1 | Healthy | Control | 0.98 | 1.12 | 1.08 | 1.58 | 1.15 |
| | Healthy | Example 1 | 1.19 | 1.05 | 1.17 | 0.84 | 1.07 |
| | IBD | Control | 1.08 | 1.10 | 0.98 | 1.23 | 1.08 |
| | IBD | Example 1 | 0.93 | 0.86 | 0.98 | 0.67 | 0.80 |
| Phase 2 | Healthy | Control | 0.80 | 1.08 | 1.04 | 1.22 | 1.19 |
| | Healthy | Example 1 | 0.86 | 0.97 | 1.04 | 0.92 | 0.89 |
| | IBD | Control | 1.07 | 0.96 | 0.84 | 0.95 | 0.95 |
| | IBD | Example 1 | 0.57 | 0.92 | 0.84 | 0.841. | 0.68 |

| | | | | | | | |
|---|---|---|---|---|---|---|---|
| * PA 1 = 1-arachidonoyl-GPI (20:4) * PA 2 = Palmitoyl-arachidonoyl-glycerophosphocholine (2) * PA 3 = Stearoyl-arachidonoyl-glycerophosphocholine (2) * PA 4 = Stearoyl-arachidonoyl-glycerophosphoethanolamine (1) * PA 5 = Stearoyl-arachidonoyl-glycerophosphoinositol (2) | | | | | | | |

As used herein, "relative fold level" refers to a normalized concentration level that relates values for each sample to an average for all samples.

As shown in Table 6 (below), with respect to the basophil levels, the test diet increased basophil abundances in dogs having IBD, which can provide immune-normalization in these animals.

**Table 6**

| **Time Point** | **Canine Group** | **Diet** | **Average Basophils 1000 cells/µL** |
|---|---|---|---|
| Baseline | Healthy | Baseline | 170 |
| | IBD | Baseline | 70 |
| Phase 1 | Healthy | Control | 130 |
| | Healthy | Example 1 | 160 |
| | IBD | Control | 100 |
| | IBD | Example 1 | 270 |
| Phase 2 | Healthy | Control | 170 |
| | Healthy | Example 1 | 80 |
| | IBD | Control | 190 |
| | IBD | Example 1 | 60 |

As set forth in Table 7 below, regarding the analysis of the fecal markers of intestinal health, it is known that fecal polyamines provide intestinal health benefits, especially when generated in situ in the intestine by gut microbes rather than being administered through diet. The test diet was shown to increase the levels of fecal polyamines above the baseline.

**Table 7**

| **Time Point** | **Canine Group** | **Diet** | **Average Total Polyamines (Relative Fold Level)** |
|---|---|---|---|
| Baseline | Healthy | Baseline | 4.11 |
| | IBD | Baseline | 9.13 |
| Phase 1 | Healthy | Control | 7.53 |
| | Healthy | Example 1 | 14.32 |
| | IBD | Control | 13.08 |
| | IBD | Example 1 | 14.39 |
| Phase 2 | Healthy | Control | 10.57 |
| | Healthy | Example 1 | 21.47 |
| | IBD | Control | 11.30 |
| | IBD | Example 1 | 15.00 |

The data described in Tables 3 to 7, demonstrate that an exemplary composition of the present invention (Example 1) can improve IBD symptoms by improving stool quality, stool biochemical profile, circulating markers of biochemical and cellular immune status, and fecal metabolites associated with intestinal health.

### Example 2 (reference example)

To determine the immune optimization of a second exemplary pet food composition, a feeding trial is performed. An exemplary pet food composition (Example 2) is prepared as set forth in Table 8 below. All amounts are provided in weight percent, based upon total weight of the pet food composition. The composition is formulated according to the nutrition standards set forth by the American Associated of Feed Control Officials (AAFCO) and the National Research Council (NRC). The composition is produced by extrusion, dried, and then coated with a palatant. The process used to manufacture the composition described in Table 8 (below), ensures the creation of the inventive matrix of present invention.

**Table 8**

| **Ingredient** | **Example 2** |
|---|---|
| | **w/w %** |
| Rice, brewers | 25.00 |
| Pea, protein concentrate | 10.00 |
| Chicken Dried 10% Ash | 8.00 |
| Chicken, ground, fresh | 7.00 |
| Sorghum, whole | 6.36 |
| Chicken Meal | 6.14 |
| Pork Fat, Choice White Grease | 1.00 |
| Flax, seed, whole | 3.00 |
| Eggs, dried, granulated | 5.50 |
| Pecan Fiber | 4.80 |
| G03 Buckwheat Groats | 4.00 |
| Oat, groats | 4.00 |
| Captex 355 Medium Chained Triglyceride | 3.00 |
| Chicken, liver, digest, optimizor LDPE H | 2.00 |
| Oat, fiber | 1.50 |
| Citrus pulp | 1.50 |
| Beet, pulp, ground, fine | 1.50 |
| Lactic acid, food grade | 1.50 |
| Fish oil, TG, 18/12, NP | 1.20 |
| Flav Gen#1 + CWG | 1.00 |
| Vitamin Premix | 0.30 |
| Potassium chloride | 0.30 |
| Carnitine, 1, 10% | 0.27 |
| Natural flavor, Pork, Liver, Digest, D'T | 0.25 |
| Choline chloride, liquid, 70% | 0.18 |
| Sensimune 75 (Yeast Cell Wall) | 0.15 |
| Vitamin E, oil, 29% | 0.14 |
| Taurine | 0.10 |
| Sodium chloride, iodized | 0.10 |
| Lysine, 1, hydrochloride | 0.10 |
| Mineral, premix, 2305 | 0.04 |
| Oat Fiber, Fruit, Vegetable blend | 0.04 |
| Dicalcium phosphate | 0.04 |

A feeding trial is carried out on 24 canines in accordance with IACUC protocols. Blood is drawn prior to and after consumption of an exemplary composition of the present invention (Example 2) for six (6) weeks and ex vivo whole blood stimulation is performed. Specifically, whole blood is drawn from the canines who consumed Example 2 and split into two samples - one stimulated with bacterial endotoxin to induce acute inflammatory response, and the second kept in a parallel incubation without any stimulation. After 24 hours of incubation, the cultured blood (with and without stimulation) is subjected to analysis for inflammatory cytokines. The unstimulated condition provides a proxy assessment of basal inflammation, while the stimulated sample indicates the capacity for response to an immune challenge. Optimization is achieved when consumption of Example 2 increases the level of inflammatory cytokines in the unstimulated (basal) sample. Cytokines are measured by enzyme linked immunosorbent assay (ELISA).

As shown in Tables 9 and 10 (below), consumption of Example 2 increased stimulates cytokine production in a companion animal (e.g. canines). The cytokines which are analyzed are as follows: IL-12 (Interleukin 12), IL-6 (Interleukin 6), VEGF-A (vascular endothelial growth factor), NGF (nerve growth factor), SCF (stem cell factor), TNF-α (tumor necrosis factor alpha), MCP-1 (monocyte chemoattractant protein-1), INF-γ (interferon gamma), and IL-10 (Interleukin 10). Six of the ten measured cytokines statistically increased in stimulated whole blood from canines having consumed Example 2 for six weeks relative to baseline. In contrast, dietary consumption of Example 2 left subjects with nearly unchanged cytokine production from unstimulated whole blood. This indicates that, despite Example 2 increasing a canine's response to acute immune stimulation, it does not increase basal inflammation.

**Table 9**

| **Diet** | **Average IL-12** | **Average IL-6** | **Average VEGF-A** | **Average NGF** | **Average SCF** | **Average TNF-α** |
|---|---|---|---|---|---|---|
| | **pg/mL** | | | | | |
| Baseline | 412.44 | 571.32 | 69.21 | 7.18 | 37.57 | 1089.93 |
| Example 2 | 565.77 | 796.12 | 103.00 | 11.64 | 46.70 | 1381.04 |

**Table 10**

| **Diet** | **Average MCP-1** | **Average VEGF-A** | **Average INF-γ** | **Average IL-10** |
|---|---|---|---|---|
| | **pg/mL** | | | |
| Baseline | 136.44 | 13.95 | 5.69 | 4.49 |
| Example 2 | 70.68 | 10.95 | 3.75 | 5.18 |

### Example 3 (reference example)

Two additional experiments are conducted to determine post-biotic production after consumption of exemplary pet food compositions of the present invention (Examples 2 and 3). The ingredient listing for Example 2 is set forth hereinabove in Table 8; and the ingredient listing for Example 3 is set forth in Table 11 (below). All amounts are provided in weight percent, based upon total weight of the pet food composition. The compositions are formulated according to the nutrition standards set forth by the American Associated of Feed Control Officials (AAFCO) and the National Research Council (NRC). The compositions may be extruded, dried, and then coated with a composition comprising a palatant. Similar to Example 2, the process used to manufacture the composition described in Table 11, ensures the creation of the inventive matrix of present invention.

**Table 11**

| **Ingredient** | **Example 3 (w/w %)** |
|---|---|
| Rice, Brewers | -- |
| Chicken Meal | 7.00 |
| Pea, protein concentrate | 8.00 |
| Cellulose, coarse | 4.00 |
| Chicken Dried 10% Ash | 6.00 |
| Barley, pearled, cracked | 20.00 |
| Chicken, ground, fresh | 8.00 |
| Flax, seed, whole | 2.00 |
| Coconut oil preserved | 4.00 |
| Chicken, liver, digest, optimizor LDPE H | 3.00 |
| Lactic acid | 1.50 |
| Methionine,dl | 0.64 |
| Potassium chloride | 0.50 |
| Sodium chloride, iodized | 0.60 |
| Fish oil, TG, 18/12, NP | 0.50 |
| Calcium carbonate | 0.30 |
| Choline chloride, liquid, 70% | 0.25 |
| Carnitine, 1, 10% | 0.30 |
| Vitamin Premix | 0.18 |
| Vitamin E, oil, 29% | 0.17 |
| Mineral, premix, 2305 | 0.08 |
| Taurine | 0.06 |
| Oat, groats | 10.00 |
| Buckwheat Groats | 6.92 |
| Pea, bran, meal | 5.00 |
| Tomato, pomace, | 5.00 |
| Citrus pulp | 3.00 |
| Beet, pulp, ground, fine | 3.00 |

Under the experiments described below, canines are fed diets in accordance with IACUC protocols.

### Experiment A - Feces Evaluation

Canines are fed a control diet or a diet consisting of Example 2 for six (6) weeks in a cross-over design. Subjects participated in a pre-feed phase consuming a maintenance diet (Hill's^{®} Science Diet^{®} Canine Adult, commercially available from Hill's Pet Nutrition, Inc.) for three (3) weeks prior to consuming the exemplary composition of the present invention (Example 2). A baseline measurement is performed at the conclusion of the pre-feed phase. The control diet contains lower levels of dietary sources of fiber-bound polyphenols and total fiber content, and the fiber is predominately in an insoluble form.

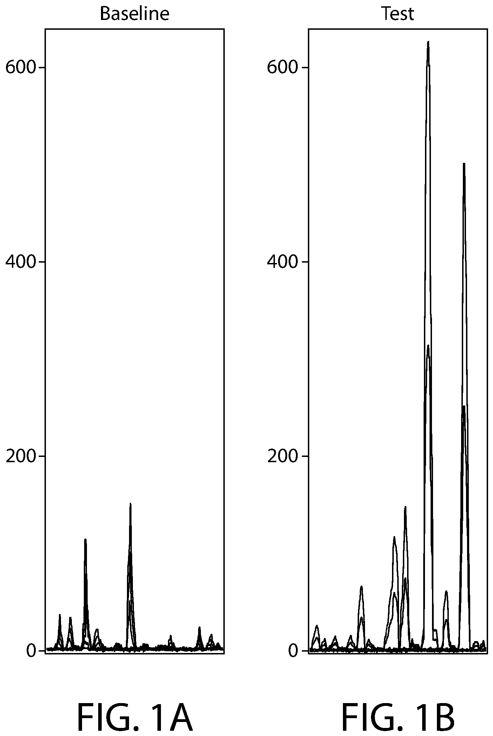

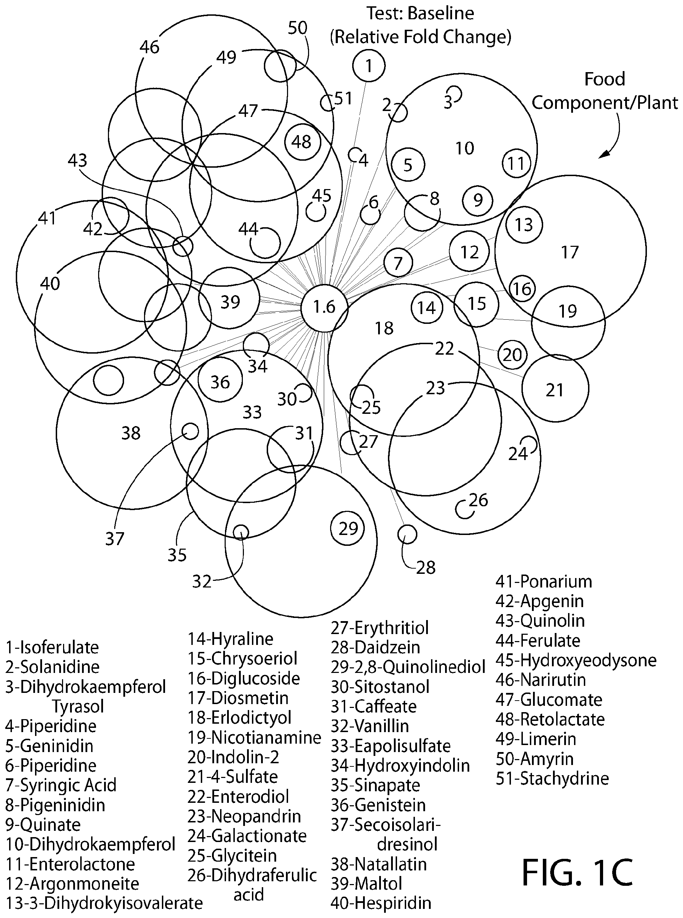

To assess the ability of Example 2 to provide targeted delivery of a polyphenol to the colon, fecal samples from canines fed a control diet and canines fed Example 2 are analyzed for differences in levels of polyphenols and polyphenol metabolites. Results of a multivariate profiling analysis of the polyphenols and metabolites are shown in Figures 1A & 1B, wherein the X axis depicts a series of polyphenols and their metabolites, and the Y axis scales relative levels of each of these found in the feces at baseline (Figure 1A); and after consuming a test diet consisting of the composition of Example 2 (Figure 1B). A pathway enrichment analysis is performed on the relative levels of polyphenols and metabolites (Figure 1C), with the food/plant component cluster showing statistical increase in test diet-fed dogs relative to baseline. As the data demonstrates, a comparison of relative levels of fecal polyphenols and post-biotics indicates that a diet consisting of Example 2 increases targeting of these bioactive agents to the colon more effectively than a diet consisting of a commercially available high-quality canine maintenance diet that did not include the inventive combination of features.

### Experiment B - Serum Evaluation

Canines are fed a control diet or a diet consisting of Example 3 for 13 consecutive weeks with no cross-over. There was no pre-feed period. The control diet contains lower levels of dietary sources of fiber-bound polyphenols than the experimental diet and is matched for total fiber content, but the fiber was largely in insoluble form.

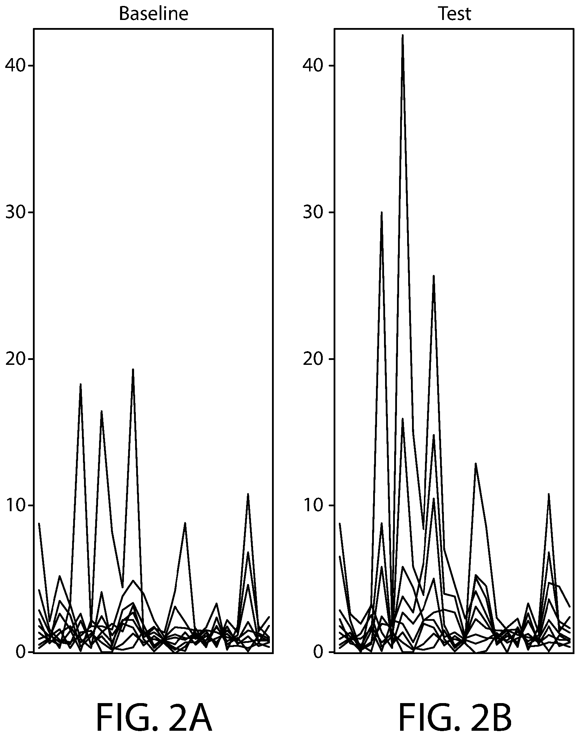

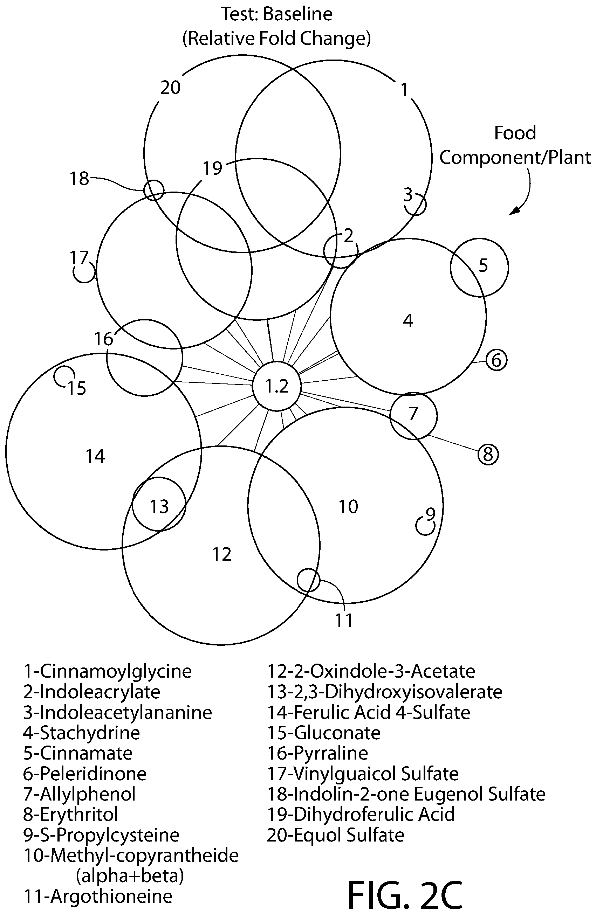

Serum from the same subjects at time points matched to fecal collections are also analyzed for the same metabolomic structures. Specifically, the serum samples are analyzed for differences in levels of microbial polyphenol metabolites and their Phase-II detoxication conjugated foms. Results of a multivariate profiling analysis of the polyphenols and metabolites are shown in Figures 2A & 2B, wherein the X axis depicts a series of serum-borne (un)conjugated microbial metabolites of polyphenols, and wherein the Y axis scales relative levels of each of these found in the serum at baseline (Figure 2A) and after consuming a test diet comprising a composition of Example 3 (Figure 2B). A pathway enrichment analysis is also performed on the relative levels of serum-borne (un)conjugated microbial metabolites of polyphenols (see Figure 2C), with the food/plant component cluster showing a statistically significant increase in test diet-fed dogs relative to baseline. As the data demonstrates, a comparison of relative levels of serum polyphenols and post-biotics indicates that a diet consisting of Example 3 increased targeting of these bioactive agents to the colon more effectively than a diet consisting of a commercially available high-quality canine maintenance diet that did not include the inventive combination of features.

### Experiment C - Microbial-derived Post-biotics

Serum levels of microbial-derived post-biotics are evaluated in canines fed an exemplary composition of the present invention (Example 3), which includes the inventive controlled release matrix, and a comparative composition, which does include the inventive controlled release matrix. Serum samples from canines fed the comparative composition and Example 3 for 13 weeks are analyzed for differences in levels of microbial polyphenol metabolites and their Phase-II detoxication conjugated forms. Pathway enrichment analysis is performed on the relative serum levels of (un)conjugated microbial metabolites of polyphenols. The results indicate that bacterial metabolites of certain food components appeared to a greater extent in the serum of canines fed Example 3 versus canines fed the comparative composition. These results further demonstrate the ability of the inventive compositions to provide targeted delivery of a benefit agent, e.g. a polyphenol.

### Example 4

An exemplary pet food composition (Example 4) is prepared as set forth in Table 12 (below). All amounts are provided in weight percent, based upon total weight of the pet food composition. The composition is formulated according to the nutrition standards set forth by AAFCO and the NRC.

**Table 12**

| **Ingredient** | **Example 4** | **Comp. Ex. I** |
|---|---|---|
| | **w/w%** | |
| Corn starch | 31.10 | 48.11 |
| Hydrolyzed chicken liver and heart | 37.00 | 32.00 |
| Soybean oil, crude, degummed | 3.60 | 4.66 |
| Cellulose, pelleted | -- | 3.94 |
| Chicken, liver, digest, optimizer LDPE H | 2.00 | 2.00 |
| Lactic acid, food grade | 1.50 | 1.50 |
| Calcium carbonate | 1.22 | 1.22 |
| Dicalcium phosphate | 1.22 | 1.22 |
| Choice White Grease/Phos Acid | 1.25 | 1.00 |
| Flav Gen#1 + CWG | 1.25 | 0.75 |
| Glyceryl monostearate | 0.74 | 0.74 |
| Potassium chloride | 0.69 | 0.69 |
| Natural flavor, Pork, Liver, Digest, D'T | 0.75 | 0.50 |
| Sodium chloride, iodized | 0.44 | 0.44 |
| Choline chloride, liquid, 70% | 0.38 | 0.38 |
| Methionine, dl | 0.30 | 0.30 |
| Vitamin, premix, canine/feline, z/d, dry | 0.20 | 0.20 |
| Sodium tripolyphosphate | 0.15 | 0.15 |
| Vitamin premix | 0.12 | 0.12 |
| Mineral, premix, 2305 | 0.07 | 0.07 |
| Taurine | 0.02 | 0.02 |
| Pecan shells, ground | 7.00 | -- |
| Flax seed whole brown | 3.00 | -- |
| Citrus pulp, dried ground | 2.50 | -- |
| Beet pulp, ground, fine | 2.50 | -- |
| Cranberry pomace | 1.00 | -- |

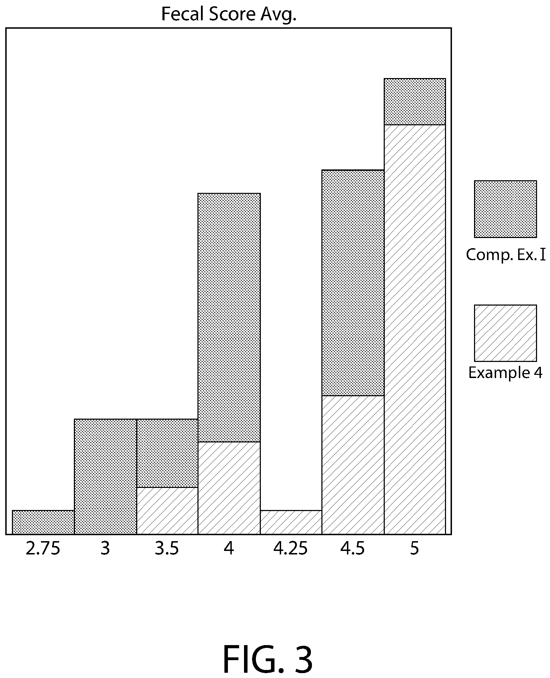

A clinical intervention trial was performed with both healthy canines and canines suffering from irritable bowel disease (IBD). Stools were collected after four (4) weeks of consuming either the Control (Comp. Ex. I) or Test diet (Example 4). Stools were visually subjected to the Hill's Pet Nutrition Scale of 1 to 5, wherein 1 indicates watery diarrhea and 5 indicates a well formed, hard stool. The histogram depicted in Figure 3 indicates the average of two stool scores for each dog when consuming a composition according to Comp. Ex I (solid gray portion of the histogram bars) or consuming a composition according to Example 4 (hatched portion of the histogram bars). The portions of the bars of the histogram at the higher scores were dominated by stools from dogs fed a composition according to Example 4, whereas the lower stool scores were observed more frequently in dogs consuming a composition according to Comp. Ex I. In particular, although numerically fewer, low scores indicate potential for gastrointestinal distress and can elicit concern in caregivers. The fact that all stool scores 3 and lower were only observed in the dogs consuming a composition according to Comp. Ex. 1 indicates the potential for compositions according to Example 4 to mitigate and remediate low stool scores and bring assurance to canine caregivers.

### Example 5

An exemplary pet food composition (Example 5) is prepared as set forth in Table 13 (below). All amounts are provided in weight percent, based upon total weight of the pet food composition. The composition is formulated according to the nutrition standards set forth by AAFCO and the NRC.

**Table 13**

| **Ingredient** | **Example 5** | **Comp. Ex. II** |
|---|---|---|
| | **w/w%** | |
| Chicken meal | 15.36 | 15.36 |
| Rice, brewers | 8.64 | 8.64 |
| Eggs, dried, granulated | 8.00 | 8.00 |
| Corn, gluten, meal | 7.62 | 7.62 |
| Sorghum, whole | 5.00 | 5.00 |
| Choice white grease/Phos Acid | 4.00 | 4.00 |
| Palatant, 12L, Liquid | 3.00 | 3.00 |
| Lactic acid, food grade | 1.50 | 1.50 |
| Soybean oil, crude, degummed | 1.05 | 1.05 |
| Palatant, ITE2, Dry | 1.00 | 1.00 |
| Potassium chloride | 0.89 | 0.89 |
| Sodium chloride, iodized | 0.61 | 0.61 |
| Calcium carbonate | 0.41 | 0.41 |
| Dicalcium phosphate | 0.25 | 0.25 |
| Vitamin E, oil, 29% | 0.17 | 0.17 |
| Choline chloride, liquid, 70% | 0.16 | 0.16 |
| Vitamin premix | 0.16 | 0.16 |
| Mineral, premix, 2305 | 0.06 | 0.06 |
| Vitamin premix | 0.04 | 0.04 |
| Tryptophan | 0.04 | 0.04 |
| Taurine | 0.04 | 0.04 |
| Cellulose, pelleted | -- | 1.50 |
| Corn, yellow, whole | 26.00 | 40.00 |
| Pecan shells, ground | 7.00 | -- |
| Flax seed whole brown | 3.00 | -- |
| Citrus pulp, dried ground | 2.50 | -- |
| Beet pulp, ground, fine | 2.50 | 0.50 |
| Cranberry pomace | 1.00 | -- |

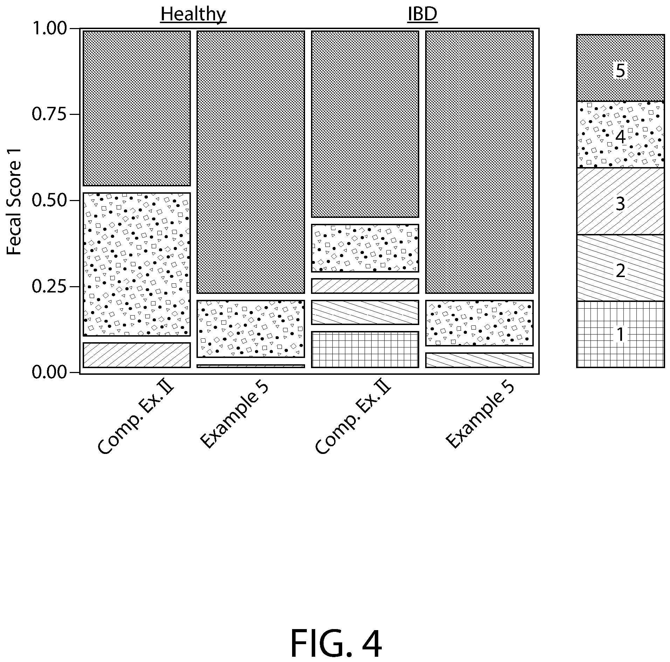

A clinical intervention trial was performed with both healthy canines and canines suffering from irritable bowel disease (IBD). Stools were collected after four (4) weeks of consuming either the Control (Comp. Ex. II) or Test diet (Example 5). Stools were visually subjected to the Hill's Pet Nutrition Scale of 1 to 5, wherein 1 indicates watery diarrhea and 5 indicates a well formed, hard stool. As evidenced by the data described in Figure 4, a diet comprising the inventive ingredient combination of the present invention (Example 5) demonstrates a clinically significant improvement in stool quality versus the stool quality resulting from a diet which does not include the inventive ingredient combination of the present invention (Comp. Ex. II).

Specifically, Figure 4 shows, in a stacked format, the proportions of stool scores produced while Healthy (bars 1 and 2 from left) and IBD dogs (bars 3 and 4 from left) were consuming Comp. Ex II (bars 1 and 3) or Example 5 (bars 2 and 4). The greater the visual portion of the bar filled, the greater the proportion of the associated stool score being manifest in that health condition on that diet.

The results illustrated in Figure 4 are also provided in tabular format below (Table 14).

**Table 14**

| | **Observed Fecal Score** | **1** | **2** | **3** | **4** | **5** |
|---|---|---|---|---|---|---|
| **IBD** | CONTROL | 4 | 3 | 2 | 5 | 18 |
| | TEST | | 2 | | 5 | 25 |
| **HEALTHY** | CONTROL | | | 3 | 14 | 15 |
| | TEST | | | 1 | 6 | 25 |

## Claims

1. A controlled release pet food composition comprising:
a matrix comprising:
a fiber component comprising a high solubility fiber source and a low solubility fiber source wherein the fiber component comprises a combination of pecan shells, flax seed, citrus pulp, beet pulp, and cranberry pomace, and
a polyphenol source, wherein the polyphenol source comprises one or more of cranberry pomace, pomegranate extract, green tea extract;
wherein the matrix is adapted to deliver the polyphenol source to the lower gastrointestinal (GI) tract of a mammal after ingestion by the mammal,
wherein the mammal is a dog or a cat, and
wherein the fiber component comprises a weight ratio of a high solubility fiber source to low solubility fiber source of from about 1:20 to about 1:2.

2. The pet food composition of claim 1, wherein the fiber component comprises a weight ratio of a high solubility fiber source to low solubility fiber source of from about 1:15 to 1:2, about 1:10 to about 1:3, about 1:5 to about 1:3, or about 1:4.

3. The pet food composition of any foregoing claim, wherein the fiber component further comprises at least one high solubility fiber source selected from oat bran, buckwheat groats, pea bran, barley, tomato pomace, or a combination thereof.

4. The pet food composition of any foregoing claim, wherein the fiber component further comprises a cellulosic material as low solubility fiber source.

5. The pet food composition of any foregoing claim, wherein the polyphenol source further comprises a flavonoid or a phenolic acid.

6. The pet food composition of any foregoing claim, wherein the polyphenol source provides a polyphenol selected from: dehydroxy rosmarinic acid, Coumaroylnepitrin, eupafolin, carnosol, scutellarin, kaempferol, rosmarinic acid, rosmanol, cirsimaritin, luteolin, 6-methoxy-luteolin, 7-epirosmannol, quercetin, catechin, hesperidin, cyanidin, or a combination thereof.

7. The pet food composition of any foregoing claim, further comprising a source of hydrolyzed animal or plant protein comprising an amino acid profile, optionally wherein the source of hydrolyzed animal or plant protein comprises chicken liver.

8. The pet food composition of claim 7, wherein the source of hydrolyzed animal or plant protein is present in an active content of from about 25 to about 45 wt. %.

9. The pet food composition of any foregoing claim, further comprising high docosahexaenoate fish oil, optionally, wherein the active content of the high docosahexaenoate fish oil is from about 0.5 to about 2.5 wt. %.

10. The pet food composition according to any foregoing claim, comprising:
from about 1 to about 10 wt.% of pecan shells;
from about 1 to about 5 wt.% of flax seed;
from about 1 to about 5 wt.% of citrus pulp;
from about 1 to about 5 wt.% of beet pulp; and
from about 0.1 to about 2 wt.% of cranberry pomace.

11. The pet food composition according to any foregoing claim, comprising:
from about 2.5 to about 8 wt.% of pecan shells;
from about 2 to about 4 wt.% of flax seed;
from about 2 to about 3 wt.% of citrus pulp;
from about 2 to about 3 wt.% of beet pulp; and
from about 0.5 to about 1.5 wt.% of cranberry pomace.

12. The pet food composition according to any foregoing claim, comprising:
about 7 wt.% of pecan shells;
about 3 wt.% of flax seed;
about 2.5 wt.% of citrus pulp;
about 2.5 wt.% of beet pulp; and
about 1 wt.% of cranberry pomace.

13. The pet food composition according to any foregoing claim, comprising:
about 3.5 wt.% of pecan shells;
about 1.5 wt.% of flax seed;
about 1.25 wt.% of citrus pulp;
about 1.25 wt.% of beet pulp; and
about 0.5 wt.% of cranberry pomace.

14. A pet food composition according to any of claims 1-13 for use in the treatment, prevention, or amelioration of a symptom of an inflammatory disease, condition or disorder in a mammal, or for use in beneficially manipulating the gut microflora of a mammal, wherein the composition is to be administered in an effective amount to a mammal in need thereof.

15. A method of forming the pet food composition of any of claims 1-13, comprising the steps of:
extruding the matrix to produce a kibble;
applying a surface coating to the kibble, optionally wherein the surface coating comprises a palatant;
wherein the matrix is adapted to deliver the polyphenol source to the lower gastrointestinal (GI) tract of the mammal after ingestion by the mammal.

## Patentansprüche

1. Tierfutterzusammensetzung mit kontrollierter Freisetzung, umfassend:
eine Matrix, umfassend:
eine Faserkomponente, umfassend eine Faserquelle mit hoher Löslichkeit und eine Faserquelle mit niedriger Löslichkeit, wobei die Faserkomponente eine Kombination aus Pekannussschalen, Leinsamen, Zitrusfruchtmark, Rübenmark und Moosbeertrester umfasst, und
eine Polyphenolquelle, wobei die Polyphenolquelle eine oder mehrere der folgenden Substanzen umfasst: Moosbeertrester, Granatapfelextrakt, Grünteeextrakt;
wobei die Matrix so angepasst ist, dass sie die Polyphenolquelle nach der Einnahme durch ein Säugetier in den unteren Gastrointestinaltrakt (GI) des Säugetiers abgibt,
wobei das Säugetier ein Hund oder eine Katze ist, und
wobei die Faserkomponente ein Gewichtsverhältnis einer Faserquelle mit hoher Löslichkeit zu einer Faserquelle mit niedriger Löslichkeit von etwa 1:20 bis etwa 1:2 aufweist.

2. Tierfutterzusammensetzung nach Anspruch 1, wobei die Faserkomponente ein Gewichtsverhältnis einer Faserquelle mit hoher Löslichkeit zu einer Faserquelle mit niedriger Löslichkeit von etwa 1:15 bis 1:2, etwa 1:10 bis etwa 1:3, etwa 1:5 bis etwa 1:3 oder etwa 1:4 aufweist.

3. Tierfutterzusammensetzung nach einem der vorhergehenden Ansprüche, wobei die Faserkomponente ferner mindestens eine Faserquelle mit hoher Löslichkeit umfasst, die aus Haferkleie, Buchweizengrütze, Erbsenkleie, Gerste, Tomatentrester oder einer Kombination davon ausgewählt ist.

4. Tierfutterzusammensetzung nach einem der vorhergehenden Ansprüche, wobei die Faserkomponente ferner ein Zellulosematerial als Faserquelle mit niedriger Löslichkeit umfasst.

5. Tierfutterzusammensetzung nach einem der vorhergehenden Ansprüche, wobei die Polyphenolquelle ferner ein Flavonoid oder eine Phenolsäure umfasst.

6. Tierfutterzusammensetzung nach einem der vorhergehenden Ansprüche, wobei die Polyphenolquelle ein Polyphenol bereitstellt, das ausgewählt ist aus: Dehydroxyrosmarinsäure, Coumaroylnepitrin, Eupafolin, Carnosol, Scutellarin, Kaempferol, Rosmarinsäure, Rosmanol, Cirsimaritin, Luteolin, 6-Methoxyluteolin, 7-Epirosmannol, Quercetin, Catechin, Hesperidin, Cyanidin oder einer Kombination davon.

7. Tierfutterzusammensetzung nach einem der vorhergehenden Ansprüche, die ferner eine Quelle für hydrolysiertes tierisches oder pflanzliches Protein mit einem Aminosäureprofil umfasst, wobei die Quelle für hydrolysiertes tierisches oder pflanzliches Protein optional Hühnerleber umfasst.

8. Tierfutterzusammensetzung nach Anspruch 7, wobei die Quelle für hydrolysiertes tierisches oder pflanzliches Protein in einem Aktivgehalt von etwa 25 bis etwa 45 Gew.-% vorhanden ist.

9. Tierfutterzusammensetzung nach einem der vorhergehenden Ansprüche, die optional ferner Fischöl mit hohem Docosahexaenoat-Gehalt umfasst, wobei der Aktivgehalt des Fischöls mit hohem Docosahexaenoat-Gehalt etwa 0,5 bis etwa 2,5 Gew.-% beträgt.

10. Tierfutterzusammensetzung nach einem der vorhergehenden Ansprüche, die Folgendes umfasst:
etwa 1 bis etwa 10 Gew.-% Pekannussschalen;
etwa 1 bis etwa 5 Gew.-% Leinsamen;
etwa 1 bis etwa 5 Gew.-% Zitrusfruchtmark;
etwa 1 bis etwa 5 Gew.-% Rübenmark;
und
etwa 0,1 bis etwa 2 Gew.-% Moosbeertrester.

11. Tierfutterzusammensetzung nach einem der vorhergehenden Ansprüche, die Folgendes umfasst:
etwa 2,5 bis etwa 8 Gew.-% Pekannussschalen;
etwa 2 bis etwa 4 Gew.-% Leinsamen;
von etwa 2 bis etwa 3 Gew.-% Zitrusfruchtmark;
von etwa 2 bis etwa 3 Gew.-% Rübenmark; und
von etwa 0,5 bis etwa 1,5 Gew.-% Moosbeertrester.

12. Tierfutterzusammensetzung nach einem der vorhergehenden Ansprüche, die Folgendes umfasst:
etwa 7 Gew.-% Pekannussschalen;
etwa 3 Gew.-% Leinsamen;
etwa 2,5 Gew.-% Zitrusfruchtmark;
etwa 2,5 Gew.-% Rübenmark; und
etwa 1 Gew.-% Moosbeertrester.

13. Tierfutterzusammensetzung nach einem der vorhergehenden Ansprüche, die Folgendes umfasst:
etwa 3,5 Gew.-% Pekannussschalen;
etwa 1,5 Gew.-% Leinsamen;
etwa 1,25 Gew.-% Zitrusfruchtmark;
etwa 1,25 Gew.-% Rübenmark; und
etwa 0,5 Gew.-% Moosbeertrester.

14. Tierfutterzusammensetzung nach einem der Ansprüche 1-13 zur Verwendung bei der Behandlung, Vorbeugung oder Linderung eines Symptoms einer entzündlichen Erkrankung, eines entzündlichen Zustands oder einer entzündlichen Störung bei einem Säugetier oder zur Verwendung bei der vorteilhaften Manipulation der Darmmikroflora eines Säugetiers, wobei die Zusammensetzung einem Säugetier, das sie benötigt, in einer wirksamen Menge zu verabreichen ist.

15. Verfahren zur Herstellung der Tierfutterzusammensetzung nach einem der Ansprüche 1-13, umfassend die Schritte:
Extrudieren der Matrix zur Herstellung eines Trockenfutters;
Aufbringen einer Oberflächenbeschichtung auf das Trockenfutter, wobei die Oberflächenbeschichtung optional einen Geschmacksstoff umfasst;
wobei die Matrix so angepasst ist, dass sie die Polyphenolquelle nach der Einnahme durch das Säugetier in den unteren Gastrointestinaltrakt (GI) des Säugetiers abgibt.

## Revendications

1. Composition alimentaire à libération contrôlée pour animaux de compagnie comprenant :
une matrice comprenant :
un constituant fibreux comprenant une source de fibres à solubilité élevée et une source de fibres à faible solubilité, dans lequel le constituant fibreux comprend une combinaison de coques de noix de pécan, de graines de lin, de pulpe d'agrumes, de pulpe de betterave et de marc de canneberge, et
une source de polyphénol, dans laquelle la source de polyphénol comprend un ou plusieurs éléments parmi le marc de canneberge, l'extrait de grenade, l'extrait de thé vert ;
dans laquelle la matrice est conçue pour distribuer la source de polyphénol au tractus gastro-intestinal (GI) inférieur d'un mammifère après ingestion par le mammifère,
dans laquelle le mammifère est un chien ou un chat, et
dans laquelle le constituant fibreux comprend un rapport pondéral entre une source de fibres à solubilité élevée et une source de fibres à faible solubilité d'environ 1:20 à environ 1:2.

2. Composition alimentaire pour animaux de compagnie selon la revendication 1, dans laquelle le constituant fibreux comprend un rapport pondéral entre une source de fibres à solubilité élevée et une source de fibres à faible solubilité d'environ 1:15 à 1:2, d'environ 1:10 à environ 1:3, d'environ 1:5 à environ 1:3 ou d'environ 1:4.

3. Composition alimentaire pour animaux de compagnie selon l'une quelconque des revendications précédentes, dans laquelle le constituant fibreux comprend en outre au moins une source de fibres à solubilité élevée choisie parmi le son d'avoine, le gruau de sarrasin, le son de pois, l'orge, la pulpe de tomate ou une combinaison de ceux-ci.

4. Composition alimentaire pour animaux de compagnie selon l'une quelconque des revendications précédentes, dans laquelle le constituant fibreux comprend en outre une matière cellulosique en tant que source de fibres à faible solubilité.

5. Composition alimentaire pour animaux de compagnie selon l'une quelconque des revendications précédentes, dans laquelle la source de polyphénol comprend en outre un flavonoïde ou un acide phénolique.

6. Composition alimentaire pour animaux de compagnie selon l'une quelconque des revendications précédentes, dans laquelle la source de polyphénol fournit un polyphénol choisi parmi : l'acide déhydroxy rosmarinique, la coumaroylnépitrine, l'eupafoline, le carnosol, la scutellarine, le kaempférol, l'acide rosmarinique, le rosmanol, la cirsimaritine, la lutéoline, la 6-méthoxy-lutéoline, le 7-épirosmannol, la quercétine, la catéchine, l'hespéridine, la cyanidine ou une combinaison de ceux-ci.

7. Composition alimentaire pour animaux de compagnie selon l'une quelconque des revendications précédentes, comprenant en outre une source de protéine animale ou de protéine végétale hydrolysée comprenant un profil d'acides aminés, éventuellement dans laquelle la source de protéine animale ou végétale hydrolysée comprend du foie de poulet.

8. Composition alimentaire pour animaux de compagnie selon la revendication 7, dans laquelle la source de protéine animale ou végétale hydrolysée est présente en une teneur active d'environ 25 à environ 45 % en poids.

9. Composition alimentaire pour animaux de compagnie selon l'une quelconque des revendications précédentes, comprenant en outre de l'huile de poisson à haute teneur en docosahexaénoate, éventuellement, dans laquelle la teneur active de l'huile de poisson à haute teneur en docosahexaénoate est d'environ 0,5 à environ 2,5 % en poids.

10. Composition alimentaire pour animaux de compagnie selon l'une quelconque des revendications précédentes, comprenant :
d'environ 1 à environ 10 % en poids de coques de noix de pécan ;
d'environ 1 à environ 5 % en poids de graines de lin ;
d'environ 1 à environ 5 % en poids de pulpe d'agrumes ;
d'environ 1 à environ 5 % en poids de pulpe de betterave ; et
d'environ 0,1 à environ 2 % en poids de marc de canneberge.

11. Composition alimentaire pour animaux de compagnie selon l'une quelconque des revendications précédentes, comprenant :
d'environ 2,5 à environ 8 % en poids de coques de noix de pécan ;
d'environ 2 à environ 4 % en poids de graines de lin ;
d'environ 2 à environ 3 % en poids de pulpe d'agrumes ;
d'environ 2 à environ 3 % en poids de pulpe de betterave ; et
d'environ 0,5 à environ 1,5 % en poids de marc de canneberge.

12. Composition alimentaire pour animaux de compagnie selon l'une quelconque des revendications précédentes, comprenant :
environ 7 % en poids de coques de noix de pécan ;
environ 3 % en poids de graines de lin ;
environ 2,5 % en poids de pulpe d'agrumes ;
environ 2,5 % en poids de pulpe de betterave ; et
environ 1 % en poids de marc de canneberge.

13. Composition alimentaire pour animaux de compagnie selon l'une quelconque des revendications précédentes, comprenant :
environ 3,5 % en poids de coques de noix de pécan ;
environ 1,5 % en poids de graines de lin ;
environ 1,25 % en poids de pulpe d'agrumes ;
environ 1,25 % en poids de pulpe de betterave ; et
environ 0,5 % en poids de marc de canneberge.

14. Composition alimentaire pour animaux de compagnie selon l'une quelconque des revendications 1 à 13 pour une utilisation dans le traitement, la prévention ou l'amélioration d'un symptôme d'une maladie, d'une affection ou d'un trouble inflammatoire chez un mammifère, ou pour une utilisation pour manipuler de manière bénéfique la microflore intestinale d'un mammifère, dans laquelle la composition doit être administrée en une quantité efficace à un mammifère en ayant besoin.

15. Procédé de mise en forme de la composition alimentaire pour animaux de compagnie selon l'une quelconque des revendications 1 à 13, comprenant les étapes de :
extrusion de la matrice pour produire une croquette ;
application d'un revêtement de surface sur la croquette, dans laquelle éventuellement le revêtement de surface comprend un agent de sapidité ;
dans lequel la matrice est conçue pour distribuer la source de polyphénol au tractus gastro-intestinal (GI) inférieur du mammifère après ingestion par le mammifère.
